# EUROPEAN PATENT APPLICATION

(11) **EP 2 687 966 A1**
(43) Date of publication of application: **22.01.2014**
(21) Application number: 12757926.6
(22) Date of filing: 14.03.2012
(51) Int. Cl.: G06F 3/048

(54) **COMPUTER DEVICE, CONTROL METHOD, AND RECORDING MEDIUM**

(30) Priority: 15.03.2011 JP 2011056406
(71) Applicant: Capcom Co., Ltd., Chuo-ku Osaka-shi Osaka 540-0037 (JP)
(72) Inventor: TEZUKA, Takeshi, Osaka 540-0037 (JP)
(74) Representative: Isarpatent
(86) International application number: PCT/JP2012/001789
(87) International publication number: WO 2012/124327

(57) **Abstract**

Provided are a computer device, a control method, and a storage medium which can suitably change a display method of a sub-content at next and the following times, in response to a content of a user's manipulation during display of the sub-content. A game program (5a) causes a game device (1) to function as a manipulation accepting section (32) for accepting an input of the user's manipulation; a main content display section (33) for displaying a main content; a sub-content display section (34) for displaying a sub-content different from the main content at a specified timing; and a display method deciding section (35) for deciding a display method of the sub-content at next and the following times, in response to a content of the user's manipulation with respect to the sub-content being displayed; wherein the sub-content display section (34) displays the sub-content based on the display method decided by the display method deciding section (35).

## Description

### Technical Field

The present invention relates to a computer device, a control method, and a storage medium which allow a sub-content to be displayed on a display when a main content is being displayed on the display.

### Background Art

Conventionally, a technique is known, in which when a main content to be executed (run) in response to a user's manipulation is being displayed on a display, a sub-content is displayed on the display at a specified timing. As an example of this technique, there is a well-known technique, in which in a case where no manipulation occurs for a specified time period during execution (running) of a particular application (example of the main content), in, for example, a personal computer, a screen saver (example of the sub-content) is displayed in place of a display image of the application. A technique in which a display method of the sub-content is changed has been proposed. Specifically, there is a technique as described below.

Patent Literature 1 discloses a technique in which a time which lapses before the screen saver is executed is changed according to a content displayed on a display. For example, when information of a higher security level is displayed on the display, the screen saver is activated earlier and the screen image is switched. Patent Literature 2 discloses a technique in which a content displayed on a display is switched, in response to a user's manipulation, depending on whether or not the manipulation has occurred. For example, in a printing device for household use, etc., including a small liquid crystal display, an image (example of main content) including a manipulation describing image is displayed on a display in a non-manipulated state. When a user performs the manipulation, the manipulation describing image (example of sub-content) is deleted from the image displayed at that point of time, while this manipulation describing image is displayed again when the non-manipulated state continues for a specified time.

Patent Literature 3 discloses a technique in which an advertisement content (example of sub-content) can be displayed on a display, during execution (running) of a game program (example of main content). In addition, Patent Literature 3 discloses a technique in which an advertisement content to be displayed is changed according to a state of proceeding of a game. Patent Literature 4 discloses a technique in which in a case where a personal computer having a function of a screen saver is connected to an image projecting device (i.e., projector), the screen saver is inhibited from being activated.

### Citation List

### Patent Literature

Patent Literature 1: Japanese Laid-Open Patent Application Publication No. 2006-133595
Patent Literature 2: Japanese Laid-Open Patent Application Publication No. 2009-188486
Patent Literature 3: Japanese Laid-Open Patent Application Publication No. 2009-089752
Patent Literature 4: Japanese Laid-Open Patent Application Publication No. 2008-070434

### Summary of Invention

### Technical Problem

As disclosed in the above stated Patent Literature 3, the game program in which the advertisement content corresponding to the sub-content is displayed in the middle of the game corresponding to the main content, has been already proposed. Also, it is known that in a case where when the specified time period passes in the non-manipulated state in which no manipulation occurs, during execution of the game, a sleep state is formed or the screen saver is activated. Also, as the sub-content to be displayed, an image representing a manipulation method of the game is used, in addition to the advertisement content. As timings when the sub-content is displayed, it is known that time before start of the game, time just after end of the game, time during loading of data in the middle of the game, in the middle of proceeding of the game, etc., may be employed.

However, some users might disfavor display of the sub-content. Or, some users would like to see only the screen image of the main content without performing any manipulation, or would like to consider how to finish (clear) the game while seeing the screen image of the main content (e.g., game). If the sub-content is displayed frequently, regardless of such circumstances, some users disfavor this. Or, rating of the main content may be downgraded, or some users may be less interested in the main content, which is undesirable.

The sub-content can be set to be non-displayed by the user. However, such a setting manipulation is burdensome to the user. Once the sub-content is set to be non-displayed by the user, an occasion in which the sub-content is displayed thereafter will not arise. Such a situation is unfavorable to a provider of the content.

Accordingly, an object of the present invention is to provide a computer device, a control method, and a storage medium which allow a display method of a sub-content at next and the following times to be suitably set, in response to a content of the user's manipulation input, in place of a main content or during display of the sub-content displayed together with the main content.

### Solution to Problem

A computer device of the present invention comprises a manipulation accepting module for accepting an input of a user's manipulation; a main content display module for displaying a main content in a display section; a sub-content display module for displaying at least one sub-content different from the main content at a specified timing, until a timing which is at least one of a timing when the manipulation accepting module accepts an input of a user's specified manipulation and a timing when a specified display period ends; and a display method deciding module for deciding a display method of the sub-content at next and the following times, in response to a content of the user's manipulation with respect to the sub-content being displayed; wherein the sub-content display module displays the sub-content based on the display method decided by the display method deciding module.

In accordance with this configuration, without fixing the display method of the sub-content, the display method of the sub-content at next and the following times can be suitably changed in response to the content of the user's manipulation during display of the sub-content. Because of this, the user's intention about the sub-content can be determined while saving the user's trouble of display setting of the sub-content. This makes it possible to reflect the user's intention on the display method of the sub-content at next and the following times. For example, for the user who disfavors the display of the sub-content, the display frequency of the sub-content is decreased.
In this way, the display method of the sub-content can be set to be adapted to the user's intention.

As defined herein, the term "content" in the present application includes at least "program for providing characters, graphic, color, sound, motion, video, or a combination of these, of movie, music, drama, creative writing, photograph, cartoon, animation, computer game, and the like, or information relating to these, via a computer (command for the computer, and a combination which results in an outcome), and an object which is created by human's creative activity and belongs to fields of culture or entertainment."

Examples of the above stated "content", the main content and the sub-content will be discussed. As examples of the main content, there are a game, a moving image, a TV broadcast program, etc., images of which are displayed on the display section. As examples of the sub-content, there are CM (advertisement), a demonstration image, a mini game, a manipulation guide relating to the main content, how to finish the main content, a map of the main content, etc.. The sub-content is not limited to that having a content associated with that of the main content so long as the user can perform a manipulation input with respect to the sub-content being displayed.

Examples of a timing when the sub-content display module terminates the display of the sub-content will be discussed. For example, as the above stated "until a timing when the manipulation accepting module accepts an input of a user's specified manipulation", there is a timing when a manipulation for cancelling the display of the sub-content is performed, in a case where the moving image or the like as the sub-content is displayed. For example, as the above stated "until a timing when a specified display period ends," there is a timing when reproduction time of the moving image or the like as the sub-content, ends, in a case where the moving image or the like as the sub-content is displayed. In addition to this, there is a timing when the mini game as the sub-content is over or a timing when the mini game is cleared and finished in a case where the mini game as the sub-content is executed. As an example of " until a timing when the manipulation accepting module accepts an input of a user's specified manipulation" and "a timing when a specified display period ends", there is a timing when specified time (e.g., 10 seconds) passes after a manipulation for cancelling the display of the moving image as the sub-content is performed, in a case where the moving image as the sub-content is displayed.

The display method of the sub-content at next and the following times may include at least the specified timing when the sub-content is displayed; and the display method deciding module may retard the specified timing when the sub-content is displayed at next and the following times.

The sub-content display module may display the sub-content when a state in which the manipulation accepting module does not accept the input of the user's manipulation during display of the main content continues for a specified time.

The display method of the sub-content at next and the following times may include at least the specified display period associated with the sub-content; and the display method deciding module may decrease or increase the specified display period of the sub-content at next and the following times. For example, reproduction time (display period) of the demonstration image is reduced or increased, or a time limit (display period) within which the mini game is cleared is reduced or increased.

The display method deciding module may decide the display method of the sub-content at next and the following times based on at least one of: a case where the manipulation accepting module accepts the input of the user's manipulation indicating that the user utilizes the sub-content being displayed; a case where the manipulation accepting module accepts the input of the user's manipulation indicating that the user does not utilize the sub-content being displayed; and a case where the manipulation accepting module does not accept the input of the user's manipulation.

The display method deciding module may reset the display method of the sub-content at next and the following times to an initial state when a preset predetermined reset condition is satisfied.

The sub-content display module may be able to display one sub-content, or plural sub-contents together, from among plural sub-contents; and the display method deciding module may decide the display method of the sub-content corresponding to the content of the input of the user's manipulation with respect to the sub-content being displayed.

According to the present invention, there is provided a method of controlling a computer device comprising the steps of: accepting an input of a user's manipulation; displaying a main content in a display section; displaying at least one sub-content different from the main content at a specified timing, until a timing which is at least one of a timing when an input of a user's specified manipulation is accepted in the step of accepting the input of the user's manipulation and a timing when a specified display period ends; and deciding a display method of the sub-content at next and the following times, in response to a content of the user's manipulation with respect to the sub-content being displayed; wherein in the step of displaying at least one sub-content, the sub-content is displayed based on the display method decided in the step of deciding the display method.

According to the present invention, there is provided a storage medium which is computer-device-readable, and contains commands executed by a control section in the computer device, the commands causing the computer device to execute the steps of: accepting an input of a user's manipulation; displaying a main content in a display section; displaying at least one sub-content different from the main content at a specified timing, until a timing which is at least one of a timing when an input of a user's specified manipulation is accepted in the step of accepting the input of the user's manipulation and a timing when a specified display period ends; and deciding a display method of the sub-content at next and the following times, in response to a content of the user's manipulation with respect to the sub-content being displayed; wherein in the step of displaying at least one sub-content, the sub-content is displayed based on the display method decided in the step of deciding the display method.

### Advantageous Effects of Invention

In accordance with the present invention, it is possible to provide a computer device, a control method, and a storage medium which can suitably change a display method (e.g., period that passes before the sub-content is re-displayed) of a sub-content at next and the following times, in response to a content of a user's manipulation with respect to the sub-content being displayed, without fixing the display method of the sub-content.

### Brief Description of Drawings

[Fig. 1] Fig. 1 is a block diagram showing a configuration of a game device which is a computer device, according to an embodiment of the present invention.
[Fig. 2] Fig. 2 is a block diagram showing a functional configuration of a control section included in the game device of Fig. 1.
[Fig. 3] Fig. 3 is a flowchart showing a sub-content display process.
[Fig. 4] Fig. 4 is a schematic view for explaining an example of an image displayed on a touch screen in the sub-content display process.
[Fig. 5] Fig. 5 is a flowchart showing an idle period setting process.
[Fig. 6] Fig. 6 is a flowchart showing an idle period reset process.
[Fig. 7] Fig. 7 is a flowchart showing an idle period reset process in a case where it is executed based on a signal received from a content server device.
[Fig. 8] Fig. 8 is a block diagram showing a functional configuration of a control section included in a game device according to Embodiment 2.
[Fig. 9] Fig. 9 is a flowchart showing a first indicator value setting process according to Embodiment 2.
[Fig. 10] Fig. 10 is a table showing an example of idle period decision table data.
[Fig. 11] Fig. 11 is a block diagram showing a functional configuration of a control section included in a game device of Embodiment 3.
[Fig. 12] Fig. 12 is a flowchart showing a sub-content display process in a case where one or plural sub-contents is/are displayed from among plural sub-contents.
[Fig. 13] Fig. 13 is a flowchart showing a second indicator value integration process.
[Fig. 14] Fig. 14 is a table showing an example of display method decision table data.
[Fig. 15] Fig. 15 is a flowchart showing a modified example of the second indicator value integration process.
[Fig. 16] Fig. 16 is a block diagram showing a functional configuration of a control section included in a game device of Embodiment 4.

### Description of Embodiments

Hereinafter, a computer device, a control method, and a storage medium according to an embodiment of the present invention will be described with reference to the drawings.

### (Embodiment 1)

### [Configuration of hardware]

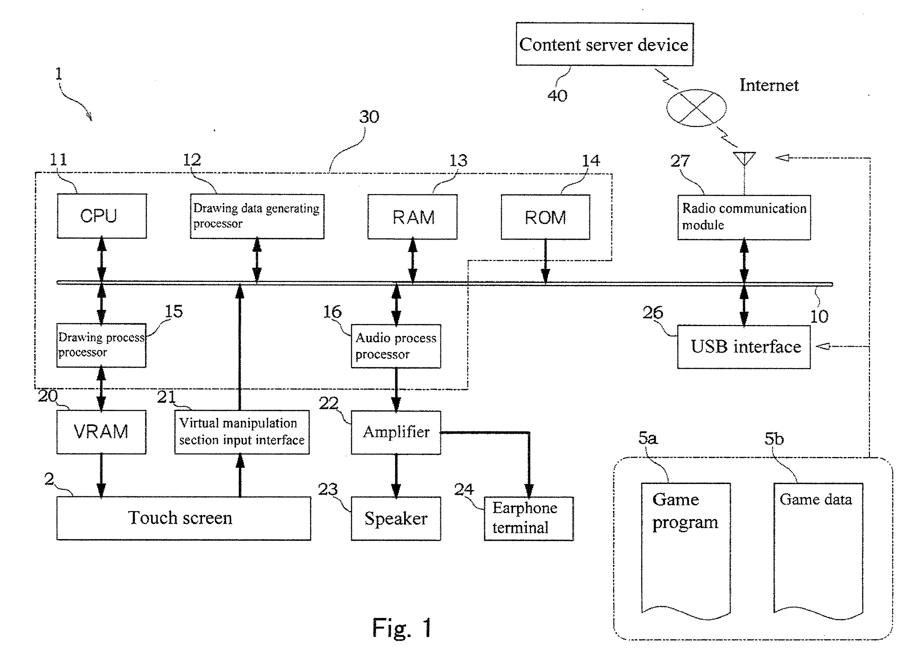

Fig. 1 is a block diagram showing a configuration of a game device 1 which is a computer device, according to an embodiment of the present invention. As shown in Fig. 1, the game device 1 includes a control section 30. The control section 30 includes a CPU 11 which is a processor section, a drawing data generating processor 12, a RAM (random access memory) 13 which is a program storage section, a ROM (read only memory) 14, a drawing process processor 15, and an audio process processor 16. In addition to these, the game device 1 includes a VRAM (Video-RAM) 20, a virtual manipulation section input interface 21, a touch screen 2, an amplifier 22, a speaker 23, an earphone terminal 24, a USB (universal serial bus) interface 26, and a radio communication module 27. Among these, the CPU 11, the drawing data generating processor 12, the RAM 13, the ROM 14, the drawing process processor 15, the audio process processor 16, the virtual manipulation section input interface 21, the USB interface 26, and the radio communication module 27 are connected to each other via a bus 10 such that data is mutually transmitted.

The game device 1 and another computer device are connected to each other via a USB cable using the USB interface 26 included in the game device 1. From the connected computer device, a game content including a game program 5a and game data 5b, and another contents can be loaded. Among these, the game program 5a causes the game device 1 to execute, for example, an action game having a content in which a player character and an enemy character make a fight in a virtual game space. The game data 5b includes data required to execute the game (e.g., image data of a background forming the virtual game space, image data used to display information such as status, audio data such as effective sounds or BGM, message data including characters and symbols, etc..).

In the above described configuration, the game device 1 (or storage device therefor) which stores the game program 5a, or the like, corresponds to the storage medium of the present invention. In addition to the game device 1, another computer device (or a storage device therefor) which provides the game program 5a, or the like, a transportable memory, etc., correspond to the storage medium of the present invention. Furthermore, a program which can be downloaded may be included in the storage medium of the present invention. In other words, an object which is able to store commands for causing the game device 1 to perform functions of the present invention as will be described below may become the storage medium of the present invention.

The radio communication module 27 performs data communication with a server device (content server device) 40 on Internet via radio communication complying with a communication standard such as HSPA (High Speed Packet Access). The radio communication module 27 can download data of various contents including the game content including the game program 5a and the game data 5b, and a sub-content as will be described later, from the content server device 40, and can perform communication with another game device 1. The game device 1 of the present embodiment executes the game based on the game content loaded via the USB interface 26 or the radio communication module 27. By performing communication with another game device 1 via the radio communication module 27 on Internet, for example, a particular user's character can make a fight with a character to be manipulated by another user.

The RAM 13 included in the control section 30 has a load area for storing the contents loaded via the USB interface 26 or the radio communication module 27, and a work area used in execution of a computer program such as the game program 5a, by the CPU 11. The ROM 14 contains base programs of the game device 1 such as a loading function via the USB interface 26 or the radio communication module 27.

The CPU 11 executes the game program 5a loaded into the RAM 13 in response to the user's manipulation with respect to the virtual manipulation section as will be described later, to control proceeding of the game. More specifically, upon inputting of a command signal by the user's manipulation with respect to the virtual manipulation section, the CPU 11 performs a predetermined game proceeding process corresponding to the command signal, in accordance with the game program 5a. The CPU 11 displays a result of the game proceeding process on the touch screen 2 as an image (hereinafter will be referred to as "game image") indicating proceeding of the game, and outputs an audio signal (hereinafter will be referred to as "game sound") indicating proceeding of the game to the speaker 23, or the earphone terminal 24, as necessary.

In accordance with the command from the CPU 11, the drawing process processor 15 draws the game image. Specifically, the CPU 11 decides a content of the game image to be displayed on the touch screen 2 in response to the command signal input by the user, and causes the drawing data generating processor 12 to generate drawing data required for the content. Then, the CPU 11 transfers the drawing data to the drawing process processor 15. Using the drawing data, the drawing process processor 15 performs a drawing process. The drawing process processor 15 generates the game image every 1/60 seconds based on the drawing data, and writes the generated game image to the VRAM 20. The touch screen 2 includes a semi-transmissive color liquid crystal display and a backlight LED (light emitting diode), and displays the game image written to the VRAM 20. The game image is an example of a main content image. A sub-content image (described later) can be displayed on the touch screen 2 in the same manner.

In addition to the above stated liquid crystal display and back light LED, the touch screen 2 includes an input means such as a touch panel provided on the liquid crystal display. When a tip of a finger of the user, or the like touches the touch screen 2, information relating to a touch position is input to the CPU 11 via the virtual manipulation section input interface 21 and the bus 10. Manipulandum images (not shown) which resemble physical manipulandums such as buttons or levers are displayed as an outer shape of the virtual manipulation section, on the touch screen 2. Therefore, the user can perform particular manipulation via the touch screen 2, by touching the touch screen 2 to manipulate the manipulandum images. Although in the present embodiment, the user manipulates the touch screen 2 as described above, the present invention is not limited to this. The game device 1 may actually include physical manipulandums such as buttons or levers, and the user may perform manipulation using the physical manipulandums.

The CPU 11 decides a sound such as an effective sound or BGM to be output from the speaker 23 according to proceeding of the game, reads audio data used to emit the sound from the RAM 13 and inputs the audio data to the audio process processor 16. When a sound emitting event occurs according to proceeding of the game, the CPU 11 reads audio data (audio data contained in the game data 5b) corresponding to the sound emitting event from the RAM 13 and inputs the audio data to the audio process processor 16. The audio process processor 16 is configured by DSP (digital signal processor). The audio process processor 16 provides particular effects (e.g., reverb, chorus, etc.) to the audio data input by the CPU 11, then converts the audio data into an analog signal, and outputs the analog signal to the amplifier 22. The amplifier 22 amplifies the audio signal input from the audio process processor 16, and then outputs the amplified audio signal to the speaker 23 and to the earphone terminal 24.

### [Functional configuration of control section]

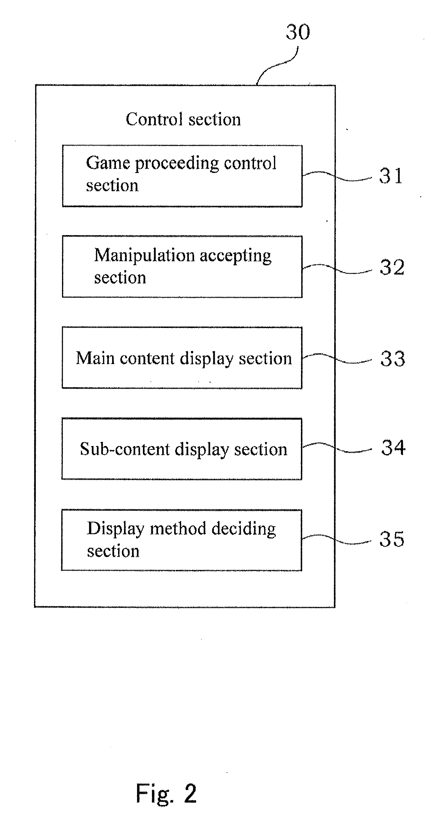

Fig. 2 is a block diagram showing a functional configuration of the control section 30 included in the game device 1 of Fig. 1. As shown in Fig. 2, the control section 30 executes the game program 5a to allow the game device 1 to serve as a game proceeding control section (game proceeding control module, game proceeding control means) 31, a manipulation accepting section (manipulation accepting module, manipulation accepting means) 32, a main content display section (main content display module, main content display means) 33, a sub-content display section (sub-content display module, sub-content display means) 34, and a display method deciding section (display method deciding module, display method deciding means) 35.

The game proceeding control section 31 controls proceeding of the action game having a content in which the player character and the enemy character make a fight in the virtual game space, as described above. In the present embodiment, this action game is the main content. In this game, the user performs a manipulation to input a command signal via the touch screen 2 so that a motion or the like of the player character is controlled. Thus, the game proceeds. The command signal input by the user's manipulation via the touch screen 2 is accepted by the manipulation accepting section 32 included in the control section 30.

The main content display section 33 displays the main content on the touch screen 2 which is a display section. For example, in a case where the main content is the action game like the present embodiment, how the player character acts within the virtual game space in response to the user's manipulation, a setting screen image (config screen image) (configuration screen image) of the game, or the like, on the touch screen 2. Hereinafter, an image (including a still image and a moving image) representing the main content will be referred to as "main content image."

The sub-content display section 34 displays the sub-content for specified time (e.g., 15 seconds) repetitively at a specified timing, on the touch screen 2, in place of the main content image or together with the main content image. For example, one example of the sub-content may be a demonstration image which presents (promotes) another game content. In the present embodiment, this sub-content can be received from the content server device 40. However, the sub-content may be included in the game data 5b. Hereinafter, an image (including a still image and a moving image) representing the sub-content will be referred to as "sub-content image". As the specified timing, "a case where a state (non-manipulated state) in which the user does not perform any manipulation input during display of the main content image reaches a specified continued non-manipulation time period (hereinafter will be referred to as "idle period")" may be employed.

As a timing when display of the sub-content ends, "timing when reproduction time (specified display period) of the sub-content such as the demonstration image ends in the case of the sub-content such as the demonstration image for which the reproduction time is determined as described above", may be employed. In a case where the user performs a manipulation for cancel in the middle, a timing when that manipulation is performed, or a timing when specified time (e.g., 10 seconds) passes after the manipulation is performed, may be employed. In a case where the sub-content is a mini game as will be described later, a timing when the mini game is over or a timing when the mini game is cleared and finished, may be employed.

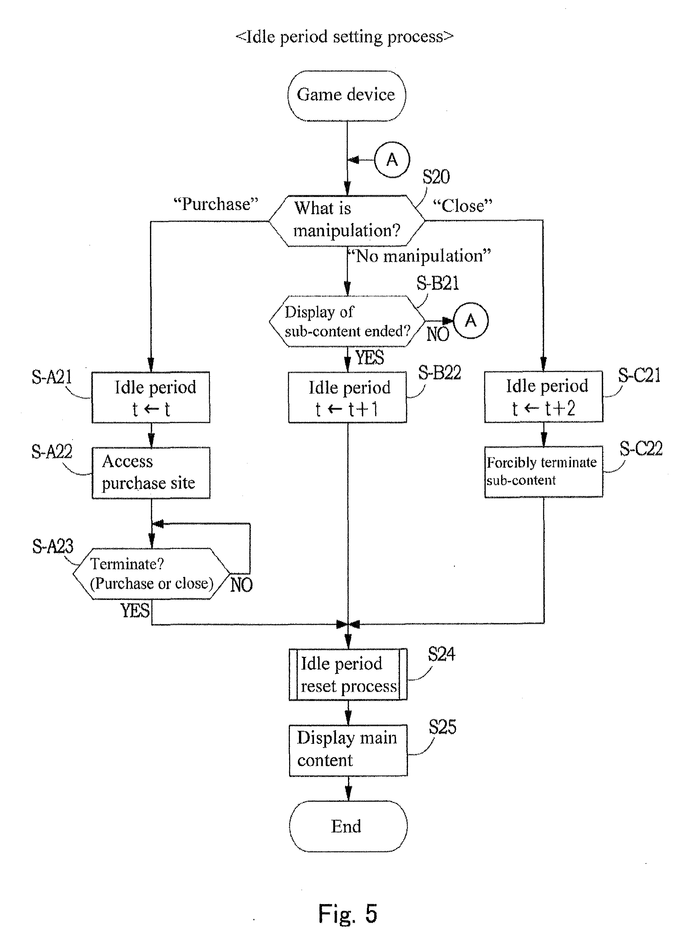

The display method deciding section 35 suitably decides a display method of the sub-content image at next and the following times, in response to a content of the user's manipulation with respect to the sub-content image being displayed. That is, the display method deciding section 35 determines a utilization frequency of the sub-content, in response to the user's manipulation. The display method deciding section 35 decides the display method in such a way that the sub-content image of the sub-content which is lower in utilization frequency is re-displayed with a lower frequency at next and the following times. This will be specifically described later (see Fig. 5).

### [Sub-content display process]

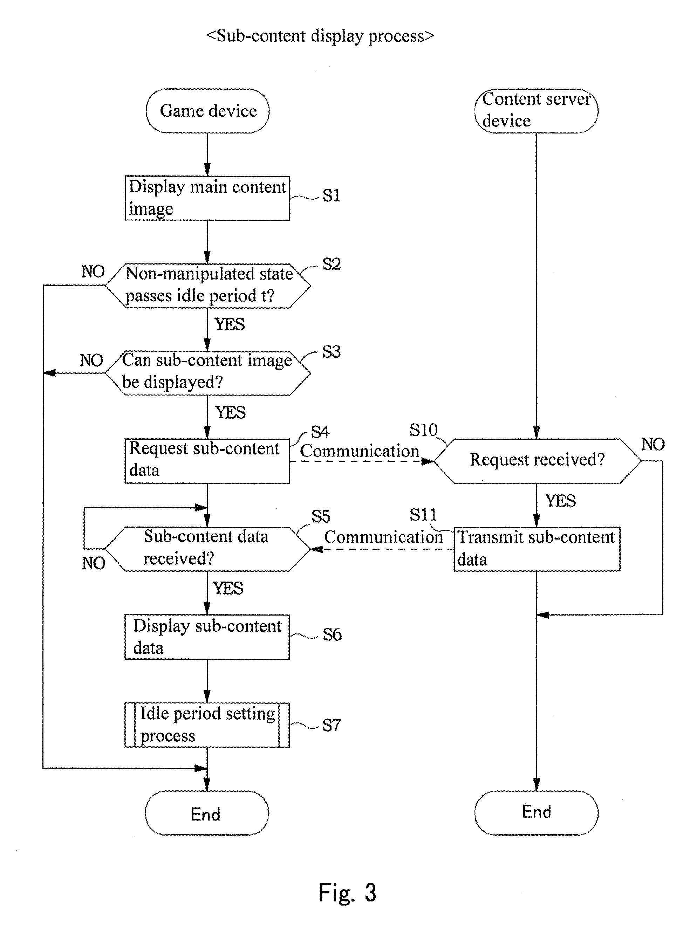

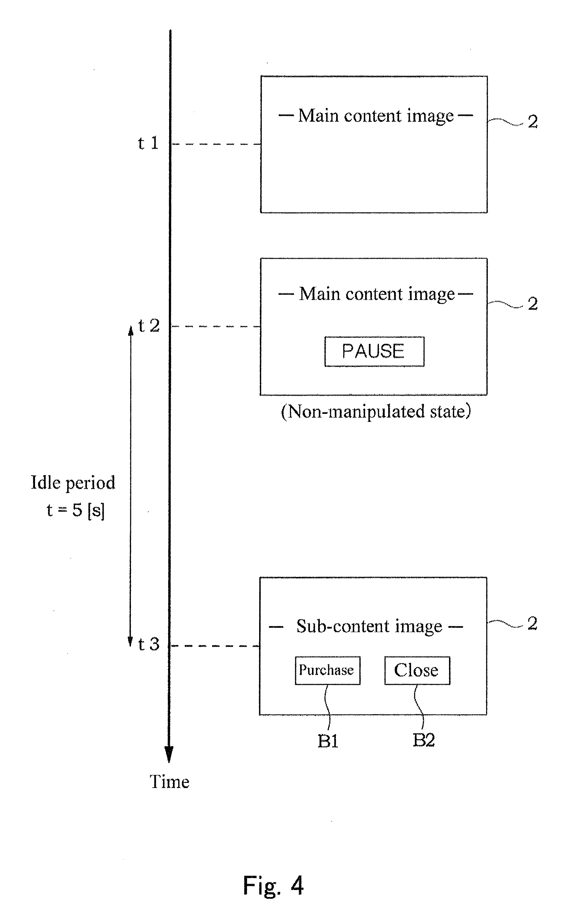

Next, a description will be specifically given of a process (sub-content display process) for switching the main content image to the sub-content image as the image displayed on the touch screen 2. As described above, the main content image is the image representing the game content, while the sub-content image is the demonstration image used to promote another game content. Fig. 3 is a flowchart showing the sub-content display process. Fig. 4 is a schematic view for explaining an example of the screen image displayed on the touch screen 2 in the sub-content display process.

Initially, the user performs a specified manipulation with respect to the game device 1, and thereby the control section 30 (game proceeding control section 31) executes the game program 5a to activate the game which is the main content. Then, the control section 30 (main content display section 33) displays the main content image such as the virtual game space or the config (configuration) screen image, on the touch screen 2 (step S1, see time **t1** in Fig. 4). In this state, the control section 30 (display method deciding section 35) determines whether or not the idle period **t** (e.g., initial value of **t** = 5 seconds) has passed in the non-manipulated state (see time **t2** in Fig. 4) in which the user has not performed any manipulation input with respect to the game device 1 (step S2). The initial value of the idle period **t** is stored in, for example, the game data 5b. With reference to the initial value of the idle period **t** stored in the game data 5b, the control section 30 executes step S2.

If it is determined that the idle period **t** has not passed in step S2 (Step S2: NO), the control section 30 terminates the sub-content display process and continues display of the main content image. On the other hand, if it is determined that the idle period **t** has passed in step S2 (Step S2: YES), the control section 30 determines whether or not the sub-content image can be displayed in place of the main content image (step S3). For example, when the present state is during display of the main content image, and is a state in which the user's manipulation input is acceptable (during pause, state in which a game title is displayed, etc.), the control section 30 determines that the sub-content image can be displayed (step S3: YES). On the other hand, when the present state is during loading of data or during display of a particular demonstration image, when the user's manipulation input is unacceptable, the control section 30 determines that the sub-content image cannot be displayed (step S3: NO). Step S3 may be omitted, and when the idle period **t** has passed in the non-manipulated state, the control section 30 may perform step S4 without exception.

If it is determined that the sub-content image cannot be displayed in step S3 (step S3: NO), the control section 30 terminates the sub-content display process and continues to display the main content image. On the other hand, if it is determined that that the sub-content image can be displayed, for example, during pause (step S3: YES), the control section 30 requests the sub-content data to the content server device 40, via the radio communication module 27 (step S4). When the content server device 40 receives this request via Internet (step S10: YES), the control section 30 transmits the sub-content data to the game device 1 (step S11). A request signal of the sub-content data transmitted from the game device 1 is affixed with identification information corresponding to the main content in execution. The content server device 40 transmits the sub-content data corresponding to this identification information. This makes it possible to provide the game device 1 with preferable sub-content corresponding to the main content in execution.

After step S4, the game device 1 determines whether or not the sub-content data has been received from the content server device 40 (step S5). If it is determined that the sub-content data has been received in the game device 1 from the content server device 40 (step S5: YES), the game device 1 displays the sub-content image (e.g., demonstration image for 15 seconds) based on the received data in place of the main content image having being displayed on the touch screen 2 (step S6, see time **t3** in Fig. 4). In the above described manner, the control section 30 switches the main content image to the sub-content image, as the image to be displayed, when the idle period **t** has passed in the non-manipulated state, during display of the main content image. Then, the game device 1 performs an idle period setting process (step S7) as will be described with reference to Fig. 5, in response to the content of the user's manipulation during display of the sub-content image.

Although the sub-content image is displayed on the touch screen 2 based on the sub-content data downloaded from the content server device 40, as described with reference to Fig. 3, the present invention is not limited to this. For example, the sub-content data may be incorporated into the game data 5b of the game (main content) being executed in the game device 1, and the sub-content image corresponding to the sub-content data may be displayed on the touch screen 2. In this case, the content server device 40 in the sub-content display process in Fig. 3 may be omitted, and step S4 and step S5 performed in the game device 1 may also be omitted.

In a case where the game device 1 downloads the sub-content data from the content server device 40, the timing in step S4 in Fig. 3 is merely exemplary. In other words, the game device 1 may request the sub-content data to the content server device 40 before the timing in step S4 in Fig. 3. For example, the game device 1 may request the sub-content data to the content server device 40 at a timing when the game device 1 is connected to the content server device 40 in advance, for example, during loading of the game program 5a or the game data 5b, or when the user logs-in. In that case, the sub-content data received from the content server device 40 may be stored in the RAM 13 or the like, before the idle period **t** passes in the non-manipulated state.

### [Idle period setting process]

Fig. 5 is a flowchart showing an idle period setting process executed by the control section 30 in the game device 1 in step S7 of Fig. 3. In the idle period setting process, the control section 30 determines the utilization frequency of the sub-content in response to the user's manipulation, and changes the idle period **t** such that the sub-content image is re-displayed with a lower frequency at next and the following times when the utilization frequency of the sub-content is lower. Hereinafter, this process will be specifically described in detail.

As shown in Fig. 5, in the idle period setting process, the control section 30 determines what manipulation the user has performed during display of the sub-content image (step S20). In the present embodiment, as the sub-content image, the demonstration image for promoting (advertising) another game is reproduced. As shown in Fig. 4, the sub-content image contains "Purchase" icon B1 and "Close" icon B2. The icons B1 and B2 are the virtual manipulation sections and can be touched by the user's tip of finger, or the like. If the user touches the "Purchase" icon B1, the user can purchase a game content relating to the displayed demonstration image via Internet. If the user touches the "Close" icon B2, the control section 30 closes the displayed sub-content image, and displays on the touch screen 2, the main content image displayed before the sub-content image is displayed.

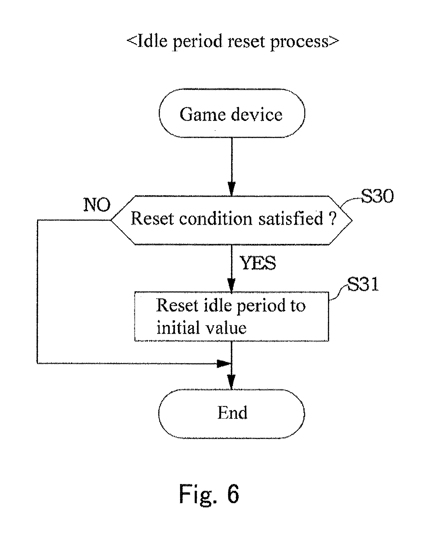

If the user touches the "Purchase" icon B1, in the sub-content image, the control section 30 determines that the "Purchase" icon B1 has been manipulated (step S20: "Purchase"). In this case, the control section 30 does not execute a process for increasing/decreasing the idle period **t** (step S-A21), and accesses a site where the game content promoted by the sub-content image can be purchased (step S-A22). Then, the control section 30 determines whether or not the access to the site has ended, based on the fact that the user has purchased this game content, closed the site, etc. (step S-A23). If it is determined that the access to the site has ended (step S-A23: YES), the control section 30 executes an idle period reset process (step S24, see Fig. 6), as will be described later. After that, the main content image is displayed again on the touch screen 2 (step S25), and the idle period setting process is terminated.

Step S20 will be described again. If the user has not performed any manipulation, the control section 30 determines "No manipulation" (step S20: "No manipulation"), and further determines whether or not display of the sub-content image (e.g., demonstration image for 15 seconds) has ended in this state (step S-B21). If it is determined that display of the sub-content image has not ended (step S-B21: NO), the control section 30 executes step S20 and the following steps again. On the other hand, if it is determined that display of the sub-content image has ended without the user's manipulation (step S-B21: YES), the control section 30 adds 1 second to the idle period **t** (step S-B22). Then, the control section 30 executes step S24 and step S25 as in the above case, to display the main content image again on the touch screen 2, and terminate the idle period setting process.

In the above described manner, if the user has not performed any manipulation during display of the sub-content image, the idle period **t** used to set a timing when the main content image is switched to the sub-content image as the displayed image is increased at next time, so that the sub-content image is less likely to be displayed (sub-content image is displayed with a lower frequency). From the fact that the user has manipulated the "Purchase" icon B1, it is presumed that the user has an intention to positively utilize the sub-content. On the other hand, from the fact that the user has not performed any manipulation input, it is presumed that the user does not have an intention to positively utilize the sub-content. In view of this, it is presumed that, if the user has not performed any manipulation during display of the sub-content image, the user's utilization frequency of the sub-content is lower, than a case where the user has manipulated the "Purchase" icon B1. Therefore, in the case where the user has not performed any manipulation, the control section 30 sets the idle period **t** longer as described above. Thus, the display frequency of the sub-content image can be reduced, and thus display is conducted to be adapted to the user's intention.

Step S20 will be described again. When the user has manipulated the "Close" icon B2 in the sub-content image, the control section 30 determines that the "Close" icon B2 has been manipulated (step S20: "Close"). In this case, the control section 30 adds 2 seconds to the idle period **t** (step S-C21). Then, the control section 30 forcibly terminates the sub-content image in response to the user's manipulation (step S-C22). Then, the control section 30 executes step S24 and step S25 as in the above case, to display the main content image on the touch screen 2, and terminate the idle period setting process.

In the above described manner, if the user has manipulated the "Close" icon B2 during display of the sub-content image, the idle period **t** is set longer, so that the sub-content image is less likely to be displayed (sub-content image is displayed with a lower frequency), than the above case of "No manipulation." From the fact that the user has manipulated the "Close" icon B2, it is presumed that the user disfavors display of the sub-content image. In view of this, it is presumed that the user's utilization frequency of the sub-content is lower, in the case where the user has manipulated the "Close" icon B2, than in the case where the user has not performed any manipulation. Therefore, in the case where the user has manipulated the "Close" icon B2, the control section 30 sets the idle period **t** longer as described above. Thus, the display frequency of the sub-content image can be further decreased, and thus display is conducted to be adapted to the user's intention.

Step S-A21 in Fig. 5 is represented for comparison with step S-B22 and step S-C21. However, as can be seen from process in which the idle period **t** is not increased and decreased, process which results in a specific change is not executed in step S-A21. For this reason, representation of step S-A21 may be omitted from the flowchart. The above stated idle period setting process is executed every time the sub-content image is displayed. The idle period **t** newly decided in step S-A21, S-B22, and S-C21 is overwritten to the data in the RAM 13 of the game device 1 every time the idle period **t** is newly decided. Therefore, in step S2 (see Fig. 3) which is the sub-content display process described above, the latest (most recent) idle period **t** overwritten and stored in the RAM 13 is read. If the idle period **t** is not stored in the RAM 13, an initial value stored in the game data 5b or the like is read, and a passage time is determined using the read idle period **t.**

Although in the example of Fig. 5, the idle period **t** is not increased and decreased when the "Purchase" icon B1 has been manipulated, 1 second is added to the idle period **t** when the user has not performed any manipulation, and 2 seconds are added to the idle period **t** when the user has manipulated the "Close" icon B2, the present invention is not limited to this. Another method may be used so long as the idle period **t** is increased (set longer) as the user's utilization frequency of the sub-content is lower, to decrease the frequency with which the sub-content is re-displayed. Therefore, the time to be added to the idle period **t** may be suitable time which is other than "1 second" and "2 seconds." Or, the idle period **t** may be increased only when the user has manipulated the "Close" icon B2, and the idle period **t** may not be increased and decreased in other cases. Or, in a case where there is another manipulation which may be accepted during display of the sub-content image, the idle period **t** is suitably set to provide the display frequency corresponding to the utilization frequency of the sub-content, in response to manipulations including another manipulation.

Or, instead of step S-A21 (**t** is not changed), S-B22 (1 second is added to **t**), and S-C21 (2 seconds are added to **t**), shown in Fig. 5, these steps may be such that S-A21 (1 second is subtracted from **t**), S-B22 (**t** is not changed), and S-C21 (1 second is added to **t**). In this setting, the display frequency of the sub-content changes in three ways, i.e., increases, remains unchanged, and decreases, instead of two ways, i.e., remains uncharged and decreases. This makes it possible to reflect the user's intention more appropriately.

### [Idle period reset process]

In a case where the above mentioned idle period setting process is executed many times, and for example, the "Close" icon B2 is manipulated each time, there is a possibility that the display frequency of the sub-content image becomes extremely low. However, such a situation is not preferable to the provider of the sub-content. To avoid this, in the present embodiment, when a predetermined reset condition is satisfied, the idle period used to set the frequency with which the sub-content image is re-displayed, is reset to an initial value (e.g., 5 seconds).

The above stated reset condition may be such that (1) when execution time of the main content (e.g., game) has reached a predetermined threshold (e.g., 5 hours), (2) when the number of times the main content starts (the number of times the main content is activated) has reached a predetermined threshold (e.g., 10 times), (3) when the number of times the sub-content (e.g., demonstration image) is displayed has reached a predetermined threshold (e.g., 5 times), etc.. When predetermined one or plural of these conditions is/are achieved, it may be determined that the reset condition is satisfied. Or, when arbitrary one or plural of these conditions is/are achieved, it may be determined that the reset condition is satisfied. Instead of the above stated conditions (1) to (3), for example, the idle period may be reset if a time period from a time point when the main content was activated at previous time until a time point when the main content is activated at present time exceeds a predetermined threshold (e.g., 7 days). Or, (5) the idle period may be reset at timings set on a calendar on the basis of actual dates, for example, at the beginning of a month, or (6) the idle period may be reset by the user's particular manipulation (reset manipulation) with respect to the game device 1.

Fig. 6 is a flowchart showing the idle period reset process executed in the game device 1 in step S24 of Fig. 5. As shown in Fig. 6, the control section 30 determines whether or not a present state satisfies the above stated reset condition (step S30). If it is determined that the present state does not satisfy the above stated reset condition (step S30: NO), the control section 30 terminates this process. On the other hand, if it is determined that the present state satisfies the above stated reset condition (step S30: YES), the control section 30 resets the idle period **t** to the initial value (e.g., 5 seconds) (step S31), and terminates this process.

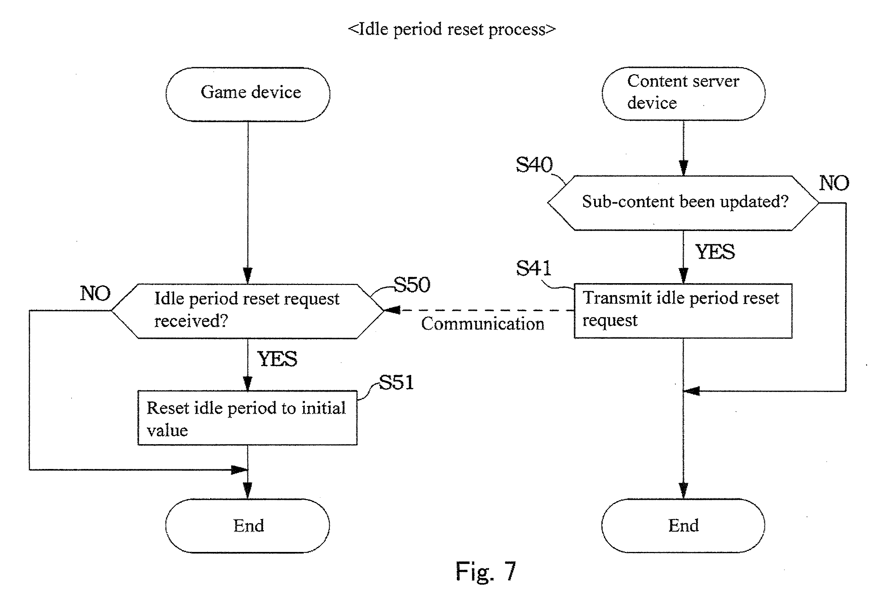

Or, (7) when the game device 1 receives a signal indicating a reset request which is transmitted from the content server device 40, the control section 30 may reset the idle period **t.** As an example of a timing when the content server device 40 requests reset, for example, there is a case where a content of the sub-content registered in the content server device 40 has been updated, etc.. Fig. 7 is a flowchart showing the idle period reset process executed by the control section 30 of the game device 1, based on a signal received from the content server device 40. As shown in Fig. 7, when the sub-content has been updated in the content server device 40 (step S40: YES), the content server device 40 transmits a signal indicating a request for idle period reset, to the game device 1 via Internet (step S41). If it is determined that this signal is received (step S50: YES), the control section 30 resets the idle period **t** to the initial value (e.g., 5 seconds) (step S51) and terminates this process.

As descried above with reference to Figs. 6 and 7, the control section 30 resets the idle period **t** when the present state satisfies the predetermined condition, to avoid a situation in which the display frequency of the sub-content image becomes extremely low, and as a result, a state in which the sub-content image is not substantially displayed continues. Although in the above described example, the idle period **t** is reset to the initial value, it may be reset to a value other than the initial value. Or, if the number of times the user has manipulated the "Close" icon B2 exceeds a predetermined value, the idle period **t** may be reset to a very large value (e.g., infinite), to provide a situation in which the sub-content image is not displayed at all thereafter.

### (Embodiment 2)

In Embodiment 1, each time the user manipulates the "Close" icon B2, for example, the process for increasing the idle period **t** is executed. Instead of changing the idle period **t** for each manipulation, the idle period **t** may be changed when a particular condition in a manipulation history is satisfied. For example, in association with the user's manipulation with respect to the sub-content image being displayed, a first indicator value which increases as the user's utilization frequency of the sub-content decreases, is preset. Then, the first indicator value corresponding to each manipulation performed by the user may be integrated, and the frequency (e.g., idle period **t**) with which the sub-content is re-displayed may be set based on the integrated value. Hereinafter, a setting process of the idle period **t** based on the integrated value of the first indicator value will be specifically described.

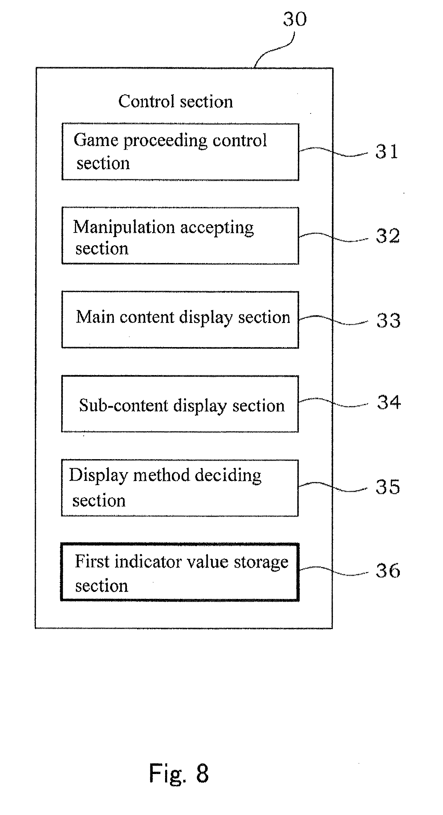

Fig. 8 is a block diagram showing a functional configuration of the control section 30 in the game device 1 according to Embodiment 2. The control section 30 includes a first indicator value storage section (first indicator value storage module, first indicator value storage means) 36 in addition to the game proceeding control section 31, the manipulation accepting section 32, the main content display section 33, the sub-content display section 34, and the display method deciding section 35, which are shown in Fig. 2. The first indicator value storage section 36 integrates a specified first indicator value corresponding to the user's manipulation for each display of the sub-content image, and stores the integrated first indicator value in the RAM 13, etc.. The term "first indicator value" is an indicator indicating the user's utilization frequency of the sub-content. More specifically, the first indicator value is set in association with the user's manipulation during display of the sub-content image, and is preset so as to increase as the user's utilization frequency of the sub-content decreases. The display method deciding section 35 of the present embodiment sets the frequency with which the sub-content is re-displayed, lower, as the integrated value of the first indicator value increases.

For example, 0 point as the first indicator value is pre-stored in the game data 5b in association with the manipulation of the "Purchase" icon B1. 10 points as the first indicator value are pre-stored in the game data 5b in association with "No manipulation". 20 points as the first indicator value are pre-stored in the game data 5b in association with the manipulation of the "Close" icon B2. Every time the sub-content image is displayed, the first indicator value storage section 36 integrates the point(s) corresponding to the user's manipulation with respect to the sub-content, and stores the resulting integrated first indicator value, in the RAM 13 or the like. In the present embodiment, the display method deciding section 35 suitably sets the idle period **t** based on the integrated value.

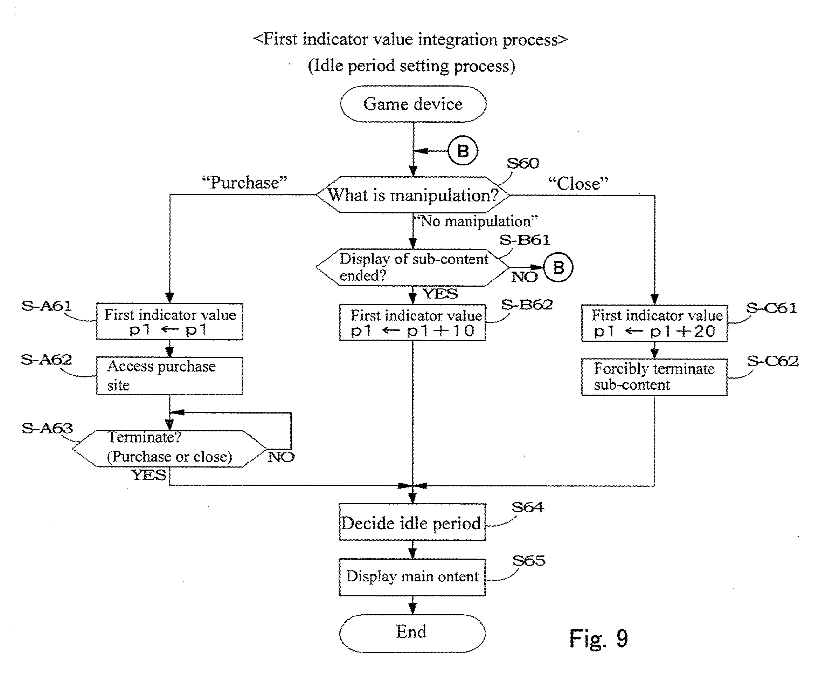

Fig. 9 is a flowchart showing a first indicator value integration process (in other words, idle period setting process based on the first indicator value) according to Embodiment 2. This process is executable in step S7 (idle period setting process) in the sub-content display process of Fig. 3, in place of the process described with reference to Fig. 5 in Embodiment 1. As can be seen from comparison between Figs. 5 and 9, steps S60, S-A62, S-A63, S-B61, S-C62, and S65 in Fig. 9 are substantially the same as steps S20, S-A22, S-A23, S-B21, S-C22, and S25 in Fig. 5. On the other hand, steps S-A61, S-B62, S-C61, and S64 in Fig. 9 are different from steps S-A21, S-B22, S-C21, and S24 in Fig. 5, and therefore will be described mainly.

In Embodiment 2, if it is determined that the user's manipulation with respect to the sub-content being displayed is touch on the "Purchase" icon B1 (step S60: "Purchase"), the control section 30 does not perform the process for increasing/decreasing a first indicator value p1 (initial value = 0) (step S-A61). In other words, the control section 30 adds the first indicator value of 0 point to a present first indicator value to attain a new present first indicator value (integrated value) p1. On the other hand, if it is determined that the user has not performed any manipulation with respect to the sub-content being displayed (step S60: "No manipulation"), and display of the sub-content image has ended in this state (step S-B61: YES), the control section 30 adds the first indicator value of 10 points to the present first indicator value p1 (step S-B62). If it is determined that the user has manipulated the "Close" icon B2 with respect to the sub-content being displayed (step S60: "Close"), the control section 30 adds the first indicator value of 20 points to the present first indicator value p1 (step S-C61).

As described above, the control section 30 adds the first indicator value of the point(s) corresponding to the user's manipulation to the present first indicator value p1 to attain a new present first indicator value p1. The first indicator value storage section 36 in the control section 30 causes the first indicator value p1 which is a result of addition to be stored in the RAM 13. Then, the display method deciding section 35 in the control section 30 decides the idle period **t** in re-display of the sub-content image based on data indicating a relation between the first indicator value (integrated value) p1 and the idle period **t**, which is pre-stored in the game data 5b (step S64).

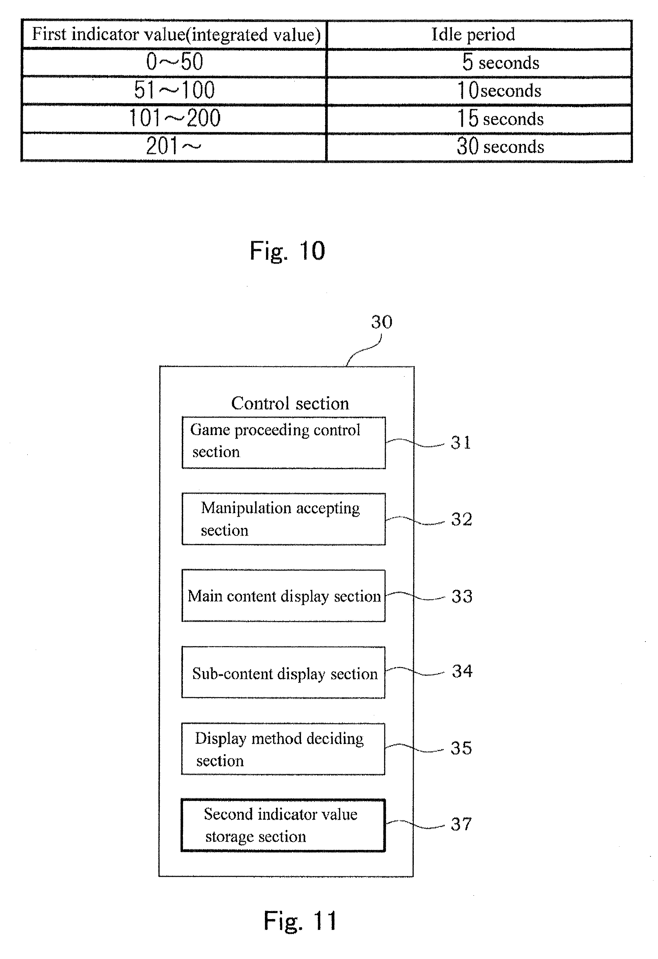

Fig. 10 is a table showing an example of idle period decision table data, indicating a relation between the first indicator value p1 and the idle period **t**. In the example of Fig. 10, 5 seconds, 10 seconds, 15 seconds and 30 seconds as the idle period **t** correspond to ranges of the first indicator value (integrated value) p1, which are a range of 0 to 50 points, a range of 51 to 100 points, a range of 101 to 200 points and a range of 201 points or greater, respectively. That is, the idle period **t** is longer as first indicator value p1 increases. The display method deciding section 35 decides the idle period **t** with reference to the idle period decision table data of Fig. 10, based on the present first indicator value p1 calculated through any of steps S-A61, S-B62, and S-C61 (step S64).

Thus, the first indicator value p1 increases and hence the idle period **t** is longer, as the utilization frequency of the sub-content is lower. This can decrease the display frequency of the sub-content image. By suitably setting the idle period decision table data instead of increasing the idle period **t** each time the user has manipulated the "Close" icon B2, the idle period **t** can be increased in the case where the user has manipulated the "Close" icon B2 plural times. For example, in the case where the idle period decision table data of Fig. 10 is employed, the idle period **t** is 5 seconds in the range in which the first indicator value p1 is 0 to 50 points. Therefore, even when the user manipulates the "Close" icon B2 each time the sub-content image is displayed, the idle period **t** in display of the sub-content image is 5 seconds from first display to third display, and **t** is changed into 10 seconds in fourth display.

The added point values in step S-B62 and step S-C61, and the content of the idle period decision table data of Fig. 10, as described above, are merely exemplary and numeric values and ranges thereof can be suitably set to different ones. Or, setting may be made so that points are added to the first indicator value p1 only when the user has manipulated the "Close" icon B2 (step S-C61), and are not added to the first indicator value p1 in other cases (steps S-A61 and S-B62).

### (Embodiment 3)

In Embodiment 1 and Embodiment 2, particular one sub-content is displayed. Alternatively, one or plural sub-contents, from among plural sub-contents, can be displayed on the touch screen 2. In this case, based on the user's manipulation during display of the sub-content image in the past, a kind or display frequency of the sub-content image (s) to be displayed at next and the following times can be set. In Embodiment 3, a description will be given of a case where one or plural sub-contents, from among plural sub-contents, is/are displayed on the touch screen 2.

Fig. 11 is a block diagram showing a functional configuration of the control section 30. The control section 30 includes a second indicator value storage section (second indicator value storage module, second indicator value storage means) 37 in addition to the game proceeding control section 31, the manipulation accepting section 32, the main content display section 33, the sub-content display section 34, and the display method deciding section 35, which are shown in Fig. 2. The second indicator value storage section 37 integrates a predetermined second indicator value corresponding to a content of the user's manipulation for each sub-content and stores the integrated second indicator value in the RAM 13, or the like, each time the sub-content image is displayed. The term "second indicator value" is an indicator indicating relative utilization frequency between the plural sub-contents. More specifically, the second indicator value is set in association with the content of the user's manipulation with respect to the sub-content image being displayed, and is preset such that the second indicator value increases as the utilization frequency of the sub-content increases. The display method deciding section 35 sets higher the frequency with which the sub-content corresponding to a greater integrated value of the second indicator value is re-displayed, in addition to the function described in Embodiment 1.

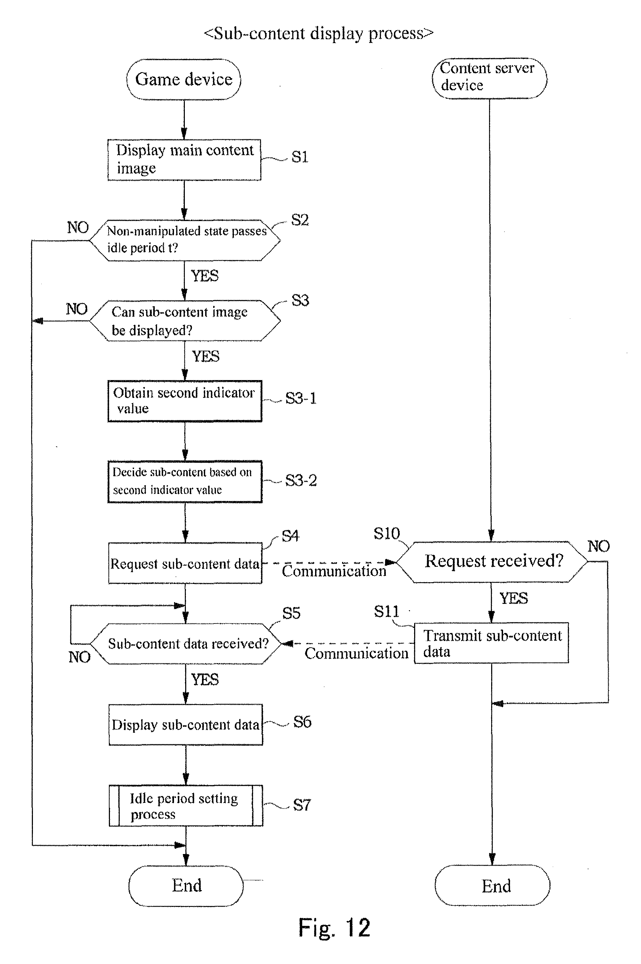

Fig. 12 is a flowchart showing the sub-content display process in a case where one or plural sub-contents, from among plural sub-contents, is/are displayed on the touch screen 2. The sub-content display process of Fig. 12 is different from the sub-content display process of Fig. 3 in that two steps which are step S3-1 and step S3-2 are inserted between step S3 and step S4 in Fig. 3. The other steps are substantially the same and will not be described in repetition.

In the sub-content display process of Fig. 12, if it is determined that the sub-content image can be displayed in step S3 (step S3: YES), the control section 30 obtains the second indicator value p2 from the RAM 13 or the like which contains the second indicator values p2 such that they respectively correspond to all sub-contents which are display targets (step S3-1). Then, with reference to display method decision table data in the game data 5b, the control section 30 decides sub-content(s) to be displayed on the touch screen 2 based on the obtained second indicator value p2 (step S3-2). Then, the control section 30 requests sub-content data of the decided sub-content to the content server device 40 via the radio communication module 27 (step S4).

Now, a description will be given of a process (second indicator value integration process) in which the second indicator value p2 obtained in step S3-1 is integrated for each display of the sub-content image and the integrated second indicator value p2 is stored in the RAM 13 or the like as described above. A description will be given of a case where two sub-contents X and Y are prepared as sub-contents to be displayed, and only one of the two sub-contents X and Y is displayed (in other words, the two sub-contents X and Y are not displayed together) on the touch screen 2. It is assumed that the sub-contents X and Y are demonstration images used to promote the game contents of different categories and each of two sub-contents X and Y includes the "Purchase" icon B1 and the "Close" icon B2 as shown in Fig. 4.

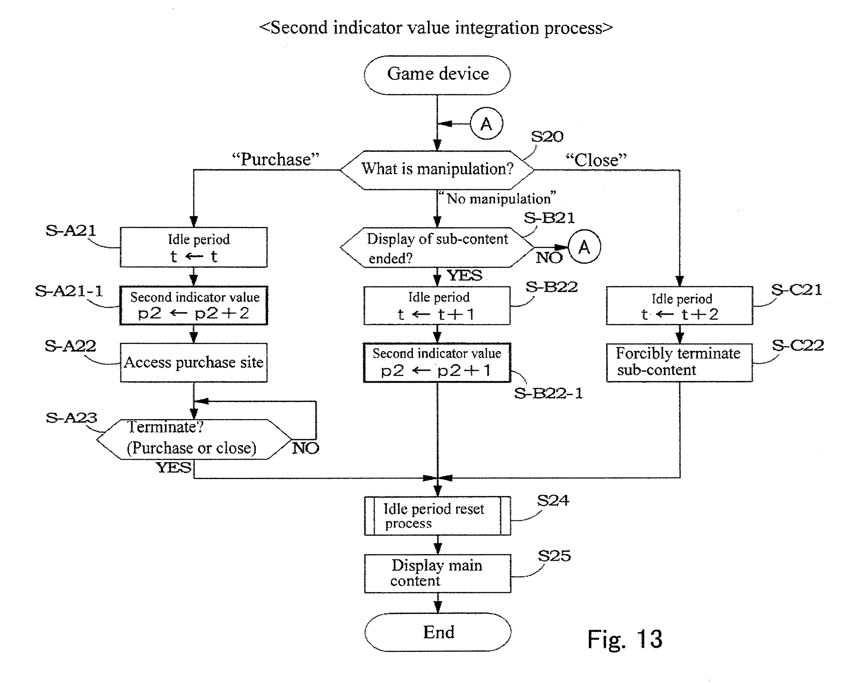

Fig. 13 is a flowchart showing the second indicator value integration process, which shows a case where the sub-content X is displayed. The process of Fig. 13 is different from the idle period setting process of Fig. 5 only in that a process for integrating the second indicator value p2 according to the utilization frequency of the sub-content X displayed (step S-A21-1, step S-B22-1) is added to the process of Fig. 5. The other steps are substantially the same and will not be described in repetition.

In the second indicator value integration process of Fig. 13, if it is determined that the user has manipulated the "Purchase" icon B1 in the sub-content X being displayed (step S20: "Purchase"), the control section 30 executes a process for adding 2 points to the second indicator value p2 associated with the sub-content X (step S-A21-1). If it is determined that display of the sub-content X has ended in a state in which the user has not performed any manipulation (step S-B21: YES), the control section 30 executes a process for adding 1 point to the second indicator value p2 associated with the sub-content X (step S-B22-1) along with the process for adding 1 second to the idle period **t** (step S-B22). On the other hand, if it is determined that the user has manipulated the "Close" icon B2 during display of the sub-content X, the control section 30 does not execute the process for increasing/ decreasing the second indicator value p2 associated with the sub-content X.

By the second indicator value integration process, the second indicator value p2 associated with the sub-content X can be changed in response to the user's manipulation with respect to the sub-content X being displayed on the touch screen 2. That is, the second indicator value p2 is greater as the utilization frequency of the sub-content X is higher.

Next, a description will be given of a process for deciding the sub-content to be displayed, with reference to the display method decision table data (step S3-2 in Fig. 12) after the integrated second indicator value p2 is obtained in step S3-1 (see Fig. 12).

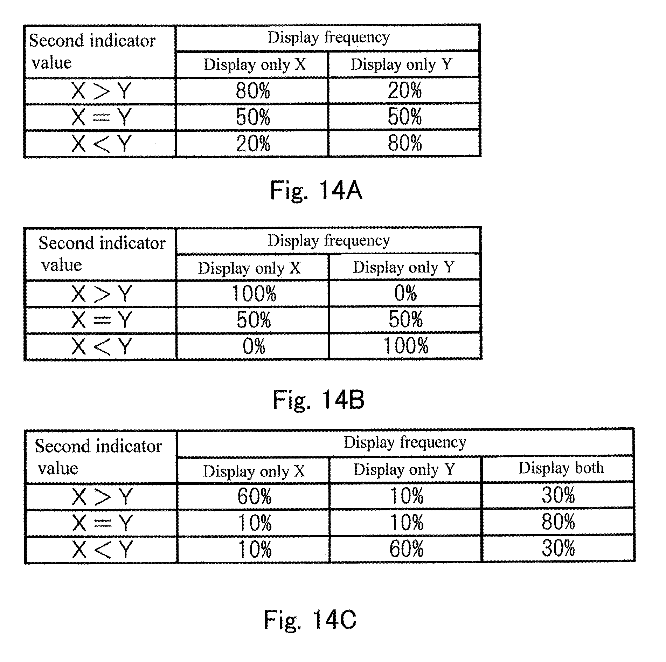

Fig. 14 is a table showing an example of the display method decision table data. This table data illustrates data to be referred to when the control section 30 decides the frequency with which one or both of the two sub-contents X and Y for display is/are displayed based on the second indicator values p2 of the sub-contents X and Y. Specifically, in the case of Fig. 14A, when the second indicator value p2 of one of the sub-contents X and Y is greater than that of the other, the sub-content image of the greater second indicator value p2 is displayed with a probability of 80%, and the sub-content image of the smaller second indicator value p2 is displayed with a probability of 20%. When the second indicator values p2 of the sub-contents X and Y are equal, the sub-content images are displayed with a probability of 50%.

In the case of data of Fig. 14B which is a modified example of Fig. 14A, when the second indicator value p2 of one of the sub-contents X and Y is greater than that of the other, the sub-content image of the greater second indicator value p2 is displayed with a probability of 100%, and the sub-content image of the smaller second indicator value p2 is not displayed. When the second indicator values p2 of the sub-contents X and Y are equal, the sub-content images are displayed with a probability of 50%.

Therefore, in stepS3-2 of Fig. 12, the control section 30 obtains the second indicator value p2 derived by integration for each display of the sub-content image in the second indicator value integration process of Fig. 13 (step S3-1), and then refers to the table data shown in Figs. 14A and 14B. Then, the control section 30 decides one sub-content to be displayed on the touch screen 2, based on display frequencies of the sub-contents X and Y defined in the table data.

In accordance with the game device 1 configured as described above, in a case where plural sub-contents for display are provided, the utilization frequency of the sub-content can be calculated as the second indicator value p2, in response to the user's manipulation with respect to the sub-content displayed. Then, based on the second indicator value p2, the display frequency of the sub-content which is lower in utilization frequency can be set lower than the display frequency of the sub-content which is higher in utilization frequency. This makes it possible to implement the display method of the sub-content to be adapted to the user's intention.

Although a case where the sub-content X is displayed has been described with reference to Fig. 13, the same occurs in a case where the sub-content Y is displayed. The data contents of Figs. 14A and 14B are merely exemplary, and are not limited to these data contents. Data contents different from the data contents of Figs. 14A and 14B may be used. Although initial values of the second indicator values p2 associated with the sub-contents X and Y can be suitably set, they may be set to 0 point, for example.

StepS3-1 and step S3-2 may be executed in the content server device 40 instead of the game device 1. In this case, if it is determined that the sub-content image can be displayed in step S3 (step S3: YES), the control section 30 of the game device 1 does not decide which of the sub-contents is to be displayed, but requests the sub-content data to the content server device 40 (step S4). When the content server device 40 receives this request (step S10: YES), it obtains the second indicator value p2, corresponding to step S3-1, decides the sub-content corresponding to step S3-2, and transmits data of the decided sub-content to the game device 1 (step S11). Then, the game device 1 may display the sub-content image based on the received sub-content data (step S6).

Although in the example of Fig. 13, the setting process (steps S-A21, S-B22, S-C21) of the idle period **t** is executed as in the process of Fig. 5, in addition to integration of the second indicator value p2 by the control section 30, the idle period setting process may be omitted in Embodiment 3. In other words, even when the idle period setting process is omitted from the flow of Fig. 13, the display method of the sub-content at next and the following times can be changed, by updating the second indicator value p2 of the sub-content in response to the user's manipulation with respect to the sub-content image being displayed.

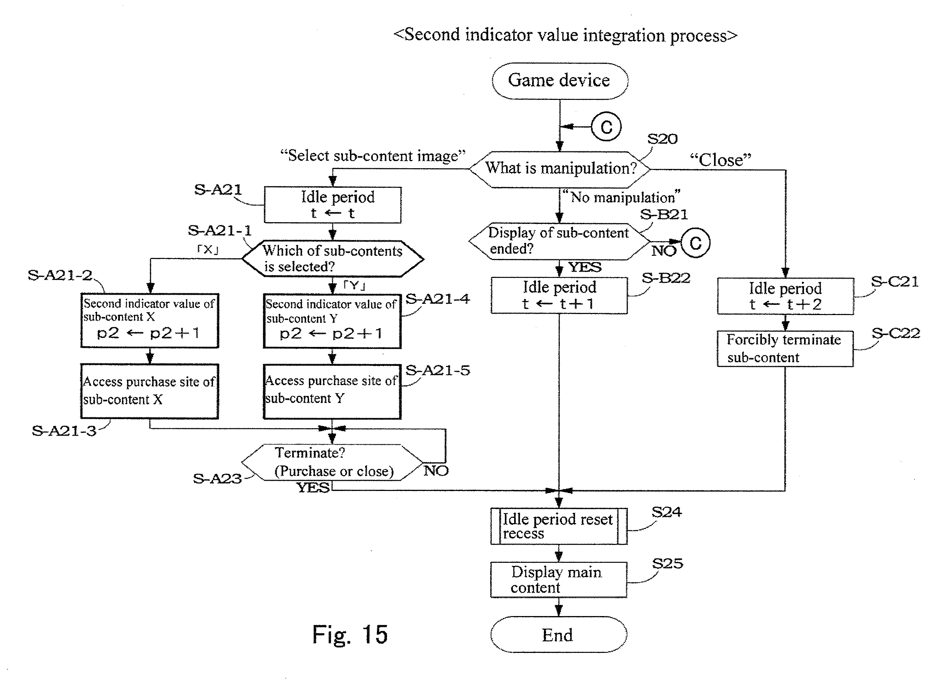

In a modified example of the second indicator value integration process of Fig. 13, the images of the sub-contents X and Y may be displayed on the touch screen 2, and addition of the second indicator value p2 corresponding to the selected sub-content may be performed. Fig. 15 is a flowchart showing a process in a case where the two sub-content images are displayed, in a modified example of the second indicator value integration process. The process of Fig. 15 is different from the idle period setting process of Fig. 5 in that regarding a condition used to shift from step S20 in which the manipulation content is determined to step S-A21 in which the idle period **t** is not increased and decreased, "selection of sub-content image" replaces "manipulation of 'Purchase" icon B1" in Fig. 5, in the flowchart of Fig. 15. In addition, the process of Fig. 15 is different from the idle period setting process of Fig. 5 in that step S-A21-1 to step S-A21-5 are inserted between step S-A21 and step S-A23, in the flowchart of Fig. 15, instead of step S-A22 in Fig. 5. The other steps are substantially the same.

Step S-A21-1 to step S-A21-5 in Fig. 15 will be now described. When the user touches the image of one of the sub-contents X and Y in a state in which the sub-contents X and Y are displayed together, the control section 30 determines that the sub-content image has been selected, in step S20. In the case, the control section 30 does not execute the process for increasing/decreasing the idle period t (step S-A21), and determines which of the sub-contents has been selected (step S-A21-1). If it is determined that, for example, the sub-content X has been selected (step S-A21-1: X), the control section 30 adds 1 point to the second indicator value p2 associated with the sub-content X (step S-A21-2), and accesses the site where the sub-content X can be purchased (step S-A21-3). On the other hand, if it is determined that, for example, the sub-content Y has been selected (step S-A21-1: Y), the control section 30 adds 1 point to the second indicator value p2 associated with the sub-content Y (step S-A21-4), and accesses the site where the sub-content Y can be purchased (step S-A21-5).

Fig. 14C is a table showing an example of the display method decision table data set such that the two sub-content images are displayed together. In the case of this table data, when the second indicator value p2 of one of the sub-contents X and Y is greater than that of the other, the sub-content image of the greater second indicator value p2 is singly displayed with a probability of 60%, the sub-content image of the smaller second indicator value p2 is singly displayed with a probability of 10%, and the two sub-content images are displayed together with a probability of 30%.

After the control section 30 obtains the second indicator value p2 derived by integration for each display of the sub-content image in the second indicator value integration process of Fig. 15 (step S3-1), the control section 30 refers to the table data shown in Fig. 14C, in step S3-2 in Fig. 12. Thereby, one or plural sub-contents to be displayed on the touch screen 2 is/are decided. In this process, the display method can also be changed such that the display frequency of the sub-content image which is lower in utilization frequency can be decreased to be adapted to the user's intention.

Although the action game has been exemplarily described above as the main content, the present invention is not limited to this. The main content may be a role playing game, another game content, TV broadcast, a moving image or a music content, which are other than the game. The sub-content may be a moving image or a still image representing a manipulation method of the game of the main content, a game scenario of the main content, a hint of the game of the main content, etc., a mini game which can be played relatively easily, a music content, etc., instead of the demonstration image used to promote the game content.

Or, specifically, in a case where the main content is the game, an image representing that it is a timing when the player character being manipulated by the user can fire special weapon, in the middle of play of the game, may be displayed as the sub-content. Or, in a case where the user performs an incorrect manipulation, a sub-content representing a correct manipulation may be displayed. Or, for example, in a case where setting is made so that the user's manipulation is acceptable during loading of the game data, a mini game which can be played during the loading may be displayed as the sub-content.

Although in the idle period setting process (Fig. 5) described in Embodiment 1, the idle period is increased to decrease the display frequency, another method may be used. For example, the idle period may be set to a fixed value (e.g., 5 seconds), and 1 is added to a counter value each time a state in which the user has not performed any manipulation during display of the main content image passes this idle period. Then, in a case where the utilization frequency of the sub-content is lower, the sub-content image may be displayed at a time point when a greater counter value is reached. More specifically, in a case where the utilization frequency of the sub-content is higher, the sub-content image is displayed at a time point (i.e., idle period 5 seconds × 1 = 5 seconds passes) when a smaller counter value (e.g., 1) is reached. On the other hand, in a case where the utilization frequency of the sub-content is lower, the sub-content image is displayed at a time point (i.e., idle period 5 seconds × 5 = 25 seconds passes) when a greater counter value (e.g., 5) is reached.

As the method of decreasing the display frequency, display time of the sub-content may be reduced, instead of increasing the time period that passes before the sub-content is displayed. In this case, if the sub-content is a still image, its display time is reduced, while if the sub-content is a moving image composed of plural chapters, the number of chapters to be reproduced may be lessened. Or, instead of decreasing the display frequency of the sub-content when the utilization frequency of the sub-content is lower, the display frequency of the sub-content may be increased when the utilization frequency of the sub-content is higher. For example, the initial value of the idle period may be set to a relatively long time (e.g., 100 seconds), and the idle period may be made shorter than the initial value when the utilization frequency of the sub-content is higher.

### (Embodiment 4)

In addition to changing the display frequency (execution frequency) of the sub-content in response to the user's manipulation with respect to the sub-content being displayed (executed), a content of the sub-content to be executed at next time may be changed. In the present embodiment, such a game device 1 will be described.

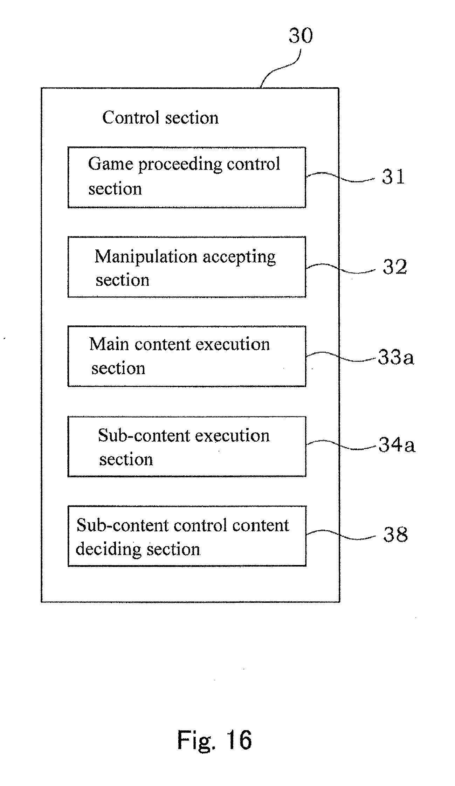

Fig. 16 is a block diagram showing a functional configuration of the control section 30 included in the game device 1 of Embodiment 4. As shown in Fig. 16, the control section 30 includes a main content execution section (main content execution module, main content execution means) 33a, a sub-content execution section (sub-content execution module, sub-content execution means) 34a, and a sub-content control content deciding section (sub-content control content deciding module, sub-content control content deciding means) 38, in addition to the game proceeding control section 31 and the manipulation accepting section 32 which are shown in Fig. 2.

The main content execution section 33a executes the main content and displays the content of the main content on the touch screen 2. The sub-content execution section 34a executes the sub-content at a particular timing during execution of the main content and displays the content of the sub-content on the touch screen 2. For example, the main content execution section 33a executes the game such as the action game or the role playing game as the main content. The sub-content execution section 34a executes the mini game as the sub-content during idling or loading, when the user does not perform any manipulation, during execution of the game, and displays the mini game on the touch screen 2. The sub-content may be executed at the above mentioned timing described in Embodiment 1 to Embodiment 3.

The sub-content control content deciding section 38 changes control of the sub-content to be executed at next time, in response to the user's manipulation with respect to the sub-content being executed. For example, in the case where the sub-content is the mini game, as described above, and the user acquires a high point as a result of play of the mini game, the execution frequency of the mini game may be increased, time for which the mini game can be played may be increased, or a difficulty (challenge) level of the mini game may be increased, at next and the following times. In the case where the difficulty (challenge) level of the mini game is changed, for example, the number of enemy characters, strength of the enemy character(s), and strength (offensive power, defensive power) of the player character manipulated by the user may be adjusted. In a case where the user performs a manipulation to "Close" the sub-content being executed, the execution frequency of the sub-content at next and the following times is decreased, as in the case described in Embodiment 1 to Embodiment 3.

As described above, in the present embodiment, the execution frequency (display frequency) of the sub-content at next and the following times is changed in response to the user's manipulation with respect to the sub-content being executed (displayed), and the content of the sub-content to be executed at next and the following times is changed. The sub-content execution section 34a executes the sub-content based on the changed content, at next time. Therefore, as the utilization frequency of the sub-content increases, the content of the sub-content to be executed at next time changes, which attracts the user's interest on the utilization of the sub-content.

The display method of the sub-content at next and the following times may be decided, with reference to at least the user's manipulation with respect to the sub-content being executed (displayed). In other words, the display method of the sub-content at next and the following times may be decided, in response to the user's manipulation with respect to the sub-content, once or plural times in the past, in previous cases, or the like, in addition to the user's manipulation with respect to the sub-content being executed (displayed).

Furthermore, the sub-content for which the content (display method) is to be decided may include at least the sub-content to be executed at next time. For example, the content (display method) of only the sub-content to be executed at next time may be changed, or the contents (display methods) of the sub-contents to be executed at next and the following times (plural times), may be changed, in response to the user's manipulation with respect to the sub-content being executed (displayed).

The display method of the sub-content is not limited to the method in which the sub-content replaces the main content as the displayed image. That is, the display method of the sub-content may be such that both of the sub-content and the main content are displayed together, instead of displaying the sub-content or the main content exclusively (selectively). For example, the sub-content (e.g., advertisement) may be composited with a portion of the main content, and the composite image may be displayed. Or, a screen may be divided into right and left parts, the main content may be displayed at the left part, and the sub-content may be displayed at the right part. A computer program and a computer device of the present invention may be applied to a game device which does not include a display section (display), i.e., game device externally attached with a separate display.

The game device 1 may transmit user information (e.g., ID number, gender, age, hobby, utilization information of each sub-content, etc.) by which the user can be identified, to the content server device 40. In this case, an administrator of the content server device 40 and a provider of the sub-content may be separated, and the user information may be transmitted to one or both of the administrator of the content server device 40 and the provider of the sub-content. Plural sub-contents may be stored in the content server device 40, and at least one of the plural sub-contents may be transmitted to the game device 1 of the user. In that case, the sub-content to be transmitted is preferably selected based on at least one of the user information. For example, CM of alcoholic beverage for the user of a man in his twenties, and CM of cosmetic item for the user of a woman in her thirties, can be selected as the sub-content, depending on the gender of the user. A selection method of the sub-content is not limited to this, but may be decided based on table data prepared in the server, or randomly extracted and decided. Or, a new sub-content or a sub-content which is used frequently by the user may be transmitted with a priority over another sub-contents.

Plural providers of the sub-content may be present, separately from the administrator of the content server device 40. Or, the provider of the sub-content may be different from the provider of the main content. The above selection of the sub-content based on at least one of the user information may be performed by the provider of the sub-content, or by a transmission administrator (administrator of the content server device 40) of the sub-content. Or, the transmission administrator may decide a priority of the sub-content (frequency with which the sub-content is selected as the sub-content to be transmitted), a display position on the touch screen 2 of the game device 1, a display size, a display time period, a display time length, or the like, based on fee (e.g., usage fee of the content server device 40) paid by the provider of the sub-content.

### Industrial Applicability

The present invention is applicable to a computer device, a control method, and a storage medium which allow a sub-content to be displayed on a display when a main content is being displayed on the display.

### Reference Signs List

- 1: game device (computer device)
- 2: touch screen
- 5a: game program
- 5b: game data
- 30: control section
- 31: game proceeding control section
- 32: manipulation accepting section
- 33: main content display section
- 34: sub-content display section
- 35: display method deciding section
- 36: first indicator value storage section
- 37: second indicator value storage section
- 40: content server device

## Claims

1. A computer device comprising:
a manipulation accepting module for accepting an input of a user's manipulation;
a main content display module for displaying a main content in a display section;
a sub-content display module for displaying at least one sub-content different from the main content at a specified timing, until a timing which is at least one of a timing when the manipulation accepting module accepts an input of a user's specified manipulation and a timing when a specified display period ends; and
a display method deciding module for deciding a display method of the sub-content at next and the following times, in response to a content of the user's manipulation with respect to the sub-content being displayed;
wherein the sub-content display module displays the sub-content based on the display method decided by the display method deciding module.

2. The computer device according to Claim 1,
wherein the display method of the sub-content at next and the following times includes at least the specified timing when the sub-content is displayed; and
wherein the display method deciding module retards the specified timing when the sub-content is displayed at next and the following times.

3. The computer device according to Claim 1,
wherein the sub-content display module displays the sub-content when a state in which the manipulation accepting module does not accept the input of the user's manipulation during display of the main content continues for a specified time.

4. The computer device according to Claim 1,
wherein the display method of the sub-content at next and the following times includes at least the specified display period associated with the sub-content; and
wherein the display method deciding module decreases or increases the specified display period of the sub-content at next and the following times.

5. The computer device according to Claim 1,
wherein the display method deciding module decides the display method of the sub-content at next and the following times based on at least one of:
a case where the manipulation accepting module accepts the input of the user's manipulation indicating that the user utilizes the sub-content being displayed;
a case where the manipulation accepting module accepts the input of the user's manipulation indicating that the user does not utilize the sub-content being displayed; and
a case where the manipulation accepting module does not accept the input of the user's manipulation.

6. The computer device according to Claim 1,
wherein the display method deciding module resets the display method of the sub-content at next and the following times to an initial state when a preset predetermined reset condition is satisfied.

7. The computer device according to Claim 1,
wherein the sub-content display module is able to display one sub-content, or plural sub-contents together, from among plural sub-contents; and
wherein the display method deciding module decides the display method of the sub-content corresponding to the content of the input of the user's manipulation with respect to the sub-content being displayed.

8. A method of controlling a computer device comprising the steps of:
accepting an input of a user's manipulation;
displaying a main content in a display section;
displaying at least one sub-content different from the main content at a specified timing, until a timing which is at least one of a timing when an input of a user's specified manipulation is accepted in the step of accepting the input of the user's manipulation and a timing when a specified display period ends; and
deciding a display method of the sub-content at next and the following times, in response to a content of the user's manipulation with respect to the sub-content being displayed;
wherein in the step of displaying at least one sub-content, the sub-content is displayed based on the display method decided in the step of deciding the display method.

9. The method of controlling the computer device according to Claim 8,
wherein the display method of the sub-content at next and the following times includes at least the specified timing when the sub-content is displayed; and
wherein in the step of deciding the display method, the specified timing when the sub-content is displayed at next and the following times is retarded.

10. The method of controlling the computer device according to Claim 8,
wherein in the step of displaying at least one sub-content,
the sub-content is displayed when a state in which the input of the user's manipulation is not accepted during display of the main content continues for a specified time, in the step of accepting the input of the user's manipulation.

11. The method of controlling the computer device according to Claim 8,
wherein the display method of the sub-content at next and the following times includes at least the specified display period associated with the sub-content; and
wherein in the step of deciding the display method, the specified display period of the sub-content at next and the following times is decreased or increased.

12. The method of controlling the computer device according to Claim 8,
wherein in the step of deciding the display method, the display method of the sub-content at next and the following times is decided based on at least one of:
a case where during display of the sub-content, the input of the user's manipulation indicating that the user utilizes the sub-content being displayed, is accepted in the step of accepting the input of the user's manipulation;
a case where during display of the sub-content, the input of the user's manipulation indicating that the user does not utilize the sub-content being displayed, is accepted in the step of accepting the input of the user's manipulation; and
a case where during display of the sub-content, the input of the user's manipulation is not accepted in the step of accepting the input of the user's manipulation.

13. The method of controlling the computer device according to Claim 8,
wherein in the step of deciding the display method,
the display method of the sub-content at next and the following times is reset to an initial state when a preset predetermined reset condition is satisfied.

14. The method of controlling the computer device according to Claim 8,
wherein in the step of displaying the sub-content,
one sub-content, or plural sub-contents together, from among plural sub-contents, can be displayed; and
wherein in the step of deciding the display method,
the display method of the sub-content is decided in response to the content of the input of the user's manipulation with respect to the sub-content being displayed.

15. A storage medium which is computer-device-readable, and contains commands executed by a control section in the computer device, the commands causing the computer device to execute the steps of:
accepting an input of a user's manipulation;
displaying a main content in a display section;
displaying at least one sub-content different from the main content at a specified timing, until a timing which is at least one of a timing when an input of a user's specified manipulation is accepted in the step of accepting the input of the user's manipulation and a timing when a specified display period ends; and
deciding a display method of the sub-content at next and the following times, in response to a content of the user's manipulation with respect to the sub-content being displayed;
wherein in the step of displaying at least one sub-content, the sub-content is displayed based on the display method decided in the step of deciding the display method.

16. The storage device which contains the commands according to Claim 15,
wherein the display method of the sub-content at next and the following times includes at least the specified timing when the sub-content is displayed; and
wherein in the step of deciding the display method, the specified timing when the sub-content is displayed at next and the following times is retarded.

17. The storage device which contains the commands according to Claim 15,
wherein in the step of displaying at least one sub-content,
the sub-content is displayed when a state in which the input of the user's manipulation is not accepted during display of the main content continues for a specified time, in the step of accepting the input of the user's manipulation.

18. The storage device which contains the commands according to Claim 15,
wherein the display method of the sub-content at next and the following times includes at least the specified display period associated with the sub-content; and
wherein in the step of deciding the display method, the specified display period of the sub-content at next and the following times is decreased or increased.

19. The storage device which contains the commands according to Claim 15,
wherein in the step of deciding the display method, the display method of the sub-content at next and the following times is decided based on at least one of:
a case where during display of the sub-content, the input of the user's manipulation indicating that the user utilizes the sub-content being displayed, is accepted in the step of accepting the input of the user's manipulation;
a case where during display of the sub-content, the input of the user's manipulation indicating that the user does not utilize the sub-content being displayed, is accepted in the step of accepting the input of the user's manipulation; and
a case where during display of the sub-content, the input of the user's manipulation is not accepted in the step of accepting the input of the user's manipulation.

20. The storage device which contains the commands according to Claim 15,
wherein in the step of deciding the display method,
the display method of the sub-content at next and the following times is reset to an initial state when a preset predetermined reset condition is satisfied.

21. The storage device which contains the commands according to Claim 15,
wherein in the step of displaying the sub-content,
one sub-content, or plural sub-contents together, from among plural sub-contents, can be displayed; and
wherein in the step of deciding the display method,
the display method of the sub-content is decided in response to the content of the input of the user's manipulation with respect to the sub-content being displayed.
